(19) Europäisches Patentamt
European Patent Office
Office européen des brevets

(11) **EP 4 316 645 A1**

(12) **EUROPEAN PATENT APPLICATION**

(43) Date of publication:
**07.02.2024 Bulletin 2024/06**

(21) Application number: **22188945.4**

(22) Date of filing: **05.08.2022**

(51) International Patent Classification (IPC):
*B01J 20/26* (2006.01)     *B01D 15/36* (2006.01)
*B01J 20/28* (2006.01)     *B01J 20/30* (2006.01)
*B01J 20/32* (2006.01)     *B01J 41/12* (2017.01)
*B01J 41/20* (2006.01)

(52) Cooperative Patent Classification (CPC):
**B01J 20/3295; B01D 15/363; B01J 20/267;
B01J 20/28011; B01J 20/3085; B01J 20/3208;
B01J 20/3219; B01J 20/3272; B01J 20/3282;
B01J 41/12; B01J 41/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Metrohm AG**
**9100 Herisau (CH)**

(72) Inventors:
• **Lamers, Brigitte**
**9100 Herisau (CH)**
• **Jung, Alexander**
**9100 Herisau (CH)**
• **Riess, Anne**
**9100 Herisau (CH)**

(74) Representative: **Hepp Wenger Ryffel AG**
**Friedtalweg 5**
**9500 Wil (CH)**

(54) **ACID-FUNCTIONALIZED ION EXCHANGE MATERIAL**

(57)     The invention relates to an ion exchange material for use as a stationary phase in an analytical or preparative separation process, in particular for the separation of anions, preferably halo acetic acids. The material comprises
- a polymer support,
- acid groups directly attached to a surface of the polymer support, the acid groups are selected from the group consisting of: sulfonic acid groups; carboxylic acid groups or combination thereof,
- a polymer layer, covalently attached to the surface of the polymer support, the polymer layer comprises an anion exchange group.

The amount of acid groups is in the range of 0.05 - 1.05 mmol/g of polymer support, preferably 0.1 - 0.9 mmol/g and particularly preferably 0.16 - 0.85 mmol/g. The acid groups and the anion exchange group are spatially separated, preferably through the polymer layer, by at least 10 nm, preferably by at least 50 nm and most preferably by at least 100nm. The invention relates also to a method for producing said ion exchange material, a chromatography column with said ion exchange material, a method of chromatographic separation of analytes and the use of said ion exchange material.

Fig. 1

EP 4 316 645 A1

**Description**

The present invention relates to an ion exchange material for use as a stationary phase in an analytical or preparative separation process, in particular for the separation of anions, preferably halo acetic acids. The invention further relates to a method of producing such ion exchange material, a chromatography column filled with the ion exchange material, a method of chromatographic separation of analytes and the use of the ion exchange material.

Ion exchangers are usually made of particulate materials, which carry charges on their surface that enable them to retain ions. Anion exchangers are often based on cationic ammonium compounds, although phosphonium and arsonium ions are also known. For purely electrostatic interactions, the retention time is determined by Coulomb's law. Accordingly, only the charge of the anion should affect the retention time of the latter. However, when ion chromatography is performed in aqueous solution, other factors affect the retention behavior, such as the hydration of the anion and the hydration of the exchange group. The polarizability of the ions involved and weaker secondary interactions between the analytes and the exchange substrate also play a role.

In WO2020208026 A1, secondary interactions between the analytes and exchange substrates are reduced by hydrophilizing the polymer core of the particle. The resulting alcohol groups can be used to attach hydrophilic polymers and anion exchange species. However, the lack of negative charges on this particle results in a long retention time of dichloroacetic acid, important inter alia for the analysis of drinking water according to EPA 300.1.

Another method to reduce secondary interactions of the analytes and the exchange substrate is described by US20050181224, in which polymer substrate particles are first sulfonated, followed by coating of a hyperbranched polymer layer onto the negatively charged polymer substrate. The repulsive interactions prevent the diffusion of anions to the hydrophobic core and into the pores. The particles are highly sulfonated, which requires many hyperbranching cycles to introduce sufficient ammonium groups in order to separate anions. In such hyperbranched anion exchangers, the capacity and selectivity cannot be varied independently. The effect of hyperbranching is also described in C. Pohl, C.Saini, J. Chromatogr. A, 1213, (2008), 37-44.

A.S. Uzhel et al., J. Chromatogr. A 1482 (2017) 57-64 describe anion exchangers with covalently-bonded hyperbranched functional ion-exchange layers containing negatively charged functionalities, next to positively charges ammonium groups. Selectivity variation can be obtained by changing the location and numbers of carboxylic acid groups in the hyperbranched layer. Good selectivity towards weakly retained organic acids and oxyhalides is obtained. However, the anion exchanger has the disadvantages that due to the proximity of negative and positive charges the net charge in a small area where the ion exchange takes place, is zero, having a negative impact on the separation properties of certain anions and capacity of the column. Capacity and selectivity cannot independently be tuned. The required pH stability of the separation material is not assured.

It is thus at least one objective of the present invention to overcome the drawback of the prior art. In particular, it is one objective of the present invention to provide an ion exchange material which allows good separation of halo acetic acids besides standards anions, which is sufficiently stable under alkaline conditions and provides elution in a reasonable time frame with shortened retention times. It is another objective to provide a method for producing such ion exchange material. Further objectives of the present invention are to provide a chromatography column with such ion exchange material, to provide a method of separation of analytes and to provide a use of such ion exchange material.

The objectives are solved by the subject-matter of the independent claims. Specific embodiments are described in the dependent claims.

A first aspect of the invention relates to an ion exchange material for use as a stationary phase in an analytical or preparative separation process, in particular for the separation of anions, preferably halo acetic acids. The ion exchange material comprises

- a polymer support,
- acid groups directly attached to a surface of the polymer support, wherein the acid groups are selected from the group consisting of: sulfonic acid groups; carboxylic acid groups or combination thereof,
- a polymer layer, covalently attached to the surface of the polymer support, wherein the polymer layer comprises an anion exchange group,

The amount of acid groups is in the range of 0.05 - 1.05 mmol/g polymer support, preferably 0.1 - 0.9 mmol/g and particularly preferably 0.16 - 0.85 mmol/g. The acid groups and the anion exchange group are spatially separated, preferably through the polymer layer, by at least 10 nm, preferably at least 50 nm and most preferably by at least 100 nm.

Preferably the polymer layer has a thickness of not more than 3000 nm, preferably not more than 500 nm, more preferably of not more than 400 and most preferably of not more than 300 nm.

The ion exchange material shows good alkaline stability and capacity under chromatographic conditions for ion exchange. It was surprisingly found that acid groups in the above range allow a very good separation of halo acetic acids, in particular besides the standard anions, with shorter retention times and thus reasonable elution times. The number of theoretical plates can be associated to the amount of carboxylic acid groups, allowing tuning of the material properties and leading to sharper peaks of the halo acetic acid in the chromatogram with increasing amount of acid groups. Without being bound to theory, it is believed that the acid groups on the surface of the polymer support repels the anions which prevents the interaction of the anions with the core of the polymer support. The distance between the anion exchange group and the acid groups is sufficiently large to avoid a zero net charge in a small area where the ion exchange takes place which further improves the separation of the analytes.

The separation of halo acetic acids become more and more important next to the separation of the standard anions due to an increasing number of upcoming norms (China GBT 5750.10-2020) and already existing norms (USA EPA 557). These norms are used to identify by-products of disinfection in low concentrations. Low concentrations require small peaks and short retention times for sufficiently good identification.

The amount of negative charge on the ion exchange material was determined by a titration method as outlined in detail further below.

Preferably, the polymer layer is attached to the polymer support via an oxygen linkage.

The polymer support can be present as particles, as gel or as membrane. Particles are preferred.

The polymer layer is preferably directly attached to the polymer support, i.e. not attached via the acid groups.

"Spatially separated" refers to a separation through bonds and through space.

The distances between acid groups and anion exchange groups were calculated based on the bond length between these groups.

The polymer support can

- at least be partially derived from aromatic hydrocarbon compounds having at least two vinyl or allyl substituents, preferably at least partially derived from divinylbenzene monomers; and
- be partially derived from monomers selected from the group of ethylvinylbenzene, vinyl acetate, styrene and any combination thereof.

The relative amount of aromatic hydrocarbon compounds having at least two vinyl or allyl substituents, preferably the relative amount of divinylbenzene derived monomers, is preferably at least 50 % by weight.

The polymer support can be derived from only styrene and divinylbenzene (DVB) monomers.

For example, the polymer can be a polystyrene-divinylbenzyl (PS/DVB) polymer, most preferably PS/DVB resulting from 55 % divinylbenzene in ethylvinylbenzene.

Polystyrene-divinylbenzene polymer is easily accessible as support material by different synthetic method known in the art.

The polymer support preferably comprises open pores, preferably with an average pore diameter of at most 60 nm. Even more preferably, the pores are microporous and/or mesoporous, according to IUPAC definition, measurable by nitrogen sorption in the BJH model as described further below.

Advantageously, the polymer layer is derived from

- a reaction of the polymer support, preferably a hydrophilized polymer support, with an oligoamine or polyamine, or
- a reaction of the polymer support, preferably a hydrophilized polymer support, with at least one polyfunctional compound comprising at least a first functional group reactive with amines and/or hydroxy groups, preferably an epoxy group, and at least a second functional group reactive with amines and/or hydroxy groups.

For example, the oligoamine, the polyamine or the at least one polyfunctional compound can be covalently coupled to the polymer support via hydroxy groups on the polymer support as will be described in more detail further below.

Alternatively, the polymer layer can be derived from

- a reaction of the polymer support, preferably a hydrophilized polymer support, with at least one polyfunctional compound comprising at least a first functional group reactive with amines and/or hydroxy groups, preferably an epoxy group, and at least a second functional group reactive with amines and/or hydroxy groups, followed by
- a reaction with an oligoamine or polyamine.

The addition of the polymer layer or composition of the polymer layers allows further tuning of the selectivity of the ion exchange material.

The polymer layer can be crosslinked with the at least one polyfunctional compound. Crosslinking of the polymer layer allows further improvement of the material properties, in particular of the separation of halo acetic acids, more particular for the separation of monochloroacetic acid and monobromoacetic acid.

Preferably, the at least one polyfunctional compound is selected from

- epoxides, in particular 1,4-butanedioldiglycidyl ether, trimethylolpropane triglycidyl ether, poly(ethylene glycol) diglycidyl ether, resorcinol diglycidyl ether, glycerol diglycidyl ether, glycidol;
- organic halogen-containing compounds, in particular epichlorohydrin, epibromohydrin, 1,1'-Oxybis[2-(2-chloroethoxy)ethane], 1,2-Bis(2-chloroethoxy)ethane, bis(2-chloroethyl) ether, 1-Chloro-3-iodopropane, 1,4-dibromobutane, 1,3-dibromopropane;
- aldehydes, in particular glutaraldehyde.

The advantage of the at least one polyfunctional compound is the diverse modification of the material it provides. The selectivity can be tuned through adjustment of the hydrophilicity or hydrophobicity. In particular, the hydrophilicity of 1,4-butanedioldiglycidyl ether (BDGE) is advantageous for the selectivity of halo acetic acids.

The anion exchange group is preferably a quaternary ammonium group, most preferably a quaternary ammonium group resulting from a reaction with glycidyltrimethylammonium chloride, glycidylmethyldiethanolammonium chloride, and glycidyltriethylammonium chloride; or resulting from a reaction with a tertiary amine, for example: N-Methyl-2-pyrrolidone, N-methylmorpholine, N-methylpyrrolidin, N,N-dimethyl ethnaolamine, N-methyl diethanolamine, N-methylpiperidine, N-ethylpiperidine, trimethylamine, triethylamine.

It is also possible to use charged phosphine groups as anion exchange group.

Preferably, the oligoamine or polyamine is selected from the group consisting of polyallylamine, linear or branched polyethyleneimine (PEI), poly(2-methylaziridine); preferably a branched PEI.

Another aspect of the invention relates to a method of producing an ion exchange material with an amount of acid groups in the range of 0.05 - 1.05 mmol/g of polymer support, preferably 0.1 - 0.9 mmol/g and particularly preferably 0.16 - 0.85 mmol/g, and with each acid group being spatially separated from an anion exchange group by at least 10 nm, preferably by at least 50 nm and most preferably by at least 100nm, for use as a stationary phase in an analytical or preparative separation process. The ion exchange material is preferably an ion exchange material as previously described. The method comprises the steps of:

a) Providing a polymer support;
b) Oxidative treatment of the polymer support in the presence of an oxidative reagent, preferably a peracid;
c) Partial reduction of the polymer support obtained in step b) with a reducing agent to obtain a hydrophilized polymer support;
d) Reacting the product of step c) with at least one polymer or polymer precursors to obtain a polymer layer on the polymer support;
e) introducing an anion exchange group to the polymer layer. Steps c) and d) are performed simultaneously or sequentially, in total or in part.

Preferably the polymer layer has a thickness of not more than 3000 nm, preferably not more than 500 nm, more preferably of not more than 400 and most preferably of not more than 300 nm.

It was surprisingly found that the partial reduction of step c) correlates with the amounts of acid groups formed on the polymer support, thus allowing the tuning of the properties of the polymer support as ion exchange material.

The obtained ion exchange material shows a good stability and high capacity. The amount of acid groups allows a very good separation of halo acetic acids, next to standard anions, with shorter retention times for halo acetic acids. The peaks of the halo acetic acids are sharper in the chromatogram, the theoretical plate number increases. The distance between the anion exchange group and the acid groups is sufficiently large to avoid a zero net charge in a small area where the ion exchange takes place.

The polymer support obtained after step b) and/or c) is an essentially hydrophilic polymer support. By "essentially hydrophilic" it is meant that the polymer support forms a suspension in water. 1 g of hydrophilic polymer support were suspended in 20 mL water using a Phoenix RA-VA Vortex mixer, shaking the solution for 30 seconds. The particles of the polymer support remained suspended for at least 15 minutes, if sufficiently hydrophilic.

Step b) may result in the formation of carboxylic acid groups (COOH) and step c) may result partially in the formation of hydroxy groups (OH) on the polymer support together with remaining carboxylic acid groups. Most preferably, the hydroxy groups of the polymer support react with the polymer or polymer precursor in step d) resulting in an oxygen-linkage between the polymer support and the polymer layer.

The oxidative reagent in step b), preferably the peracid, can be generated in situ.

A polymer precursor can be any molecule that enables the formation of a polymer layer through multiple reactions with itself or other molecules, e.g. a polyfunctional compound as monomer, poly- or oligoamines as described further below.

Step b) or step c) can be followed by an additional treatment in the presence of sulfuric acid. In any event that step is carried out before step d). This step may allow the introduction of sulfonic acid groups to the polymer support providing a polymer support with carboxylic and sulfonic acids groups directly attached thereto. Most preferably, the step is conducted in the presence of acetic acid as solvent.

Sulfonic acid groups in combination with carboxylic acid groups pushes the halo acetic acids further to earlier retention times compared to a similar amount of only carboxylic acids. This is most likely due to the higher $pk_a$ of sulfonic acid groups ($SO_3H$) compared to carboxylic acid groups (COOH).

A particular advantage of this method compared to polymer support with only sulfonic acid groups is that a polymer layer can still be covalently attached to the polymer support and the resolution of injection peak to fluoride (IP/F) is still very good since only small amounts of sulfonic acid groups are added and combined with carboxylic acid groups, e.g. in a ratio of 0.15 mmol/g sulfonic acid groups to 0.23 mmol/g carboxylic acid groups.

The amount of peracid in step b) is preferably generated in the presence of acid and hydrogen peroxide, wherein the ratio (mol/mol) between acid and $H_2O_2$ is in the range of 1.0:0.12 to 1.0:0.72, preferably 1.0:0.14 to 1.0:0.52, most preferably 1.0:0.16 to 1.0:0.44.

Most preferably, 35 % hydrogen peroxide is used and added in amount to add to the above-mentioned ratios.

The reducing agent can be selected from the group consisting of: lithium aluminum hydride, sodium borohydride, sodium triacetoxyborohydride, sodium cyanoborohydride.

The amount of reducing agent in step c) can be in the range of 0.03 g to 1.0 g, preferably 0.05 g to 0.8 g, most preferably 0.1 g to 0.5 g per 1.0 g of polymer support obtained in step b), based on the dry weight of the polymer support.

By "dry weight" it is meant that the polymer support or the polymer are present as $\geq$ 98 %, i.e. having a moisture content of not more than 2 %. The moisture content was analyzed using a compact moisture analyzer MA 35 from Sartorius.

The amount of reducing agent allows a partial reduction of present carboxylic acid groups and thus allows the tuning of their amount which, in turn, allows tuning of the selectivity and number of theoretical plates.

The polymer support in step a) is preferably

- at least partially derived from aromatic hydrocarbon compounds having at least two vinyl or allyl substituents, preferably at least partially derived from divinylbenzene monomers; and
- partially derived from monomers selected from the group of ethylvinylbenzene, vinyl acetate, styrene and any combination thereof.

The relative amount of aromatic hydrocarbon compounds having at least two vinyl or allyl substituents, preferably the relative amount of divinylbenzene derived monomers, is preferably at least 50 % by weight.

For example, the polymer can be a polystyrene-divinylbenzyl (PS/DVB) polymer, most preferably PS/DVB resulting from 55 % divinylbenzene in ethylvinylbenzene. A copolymer comprised of only polystyrene and divinylbenzene building blocks is also conceivable.

The polymer support provided in step a) is preferably open porous, preferably with an average pore diameter of at most 60 nm. Even more preferably, the pores are microporous and/or mesoporous, according to IUPAC definition, measurable by nitrogen sorption in the BJH model as described further below.

Step d) may comprise the step of

- reacting the support material obtained in step b) with an oligoamine or polyamine, preferably in the presence of a reducing agent, or
- reacting the support material obtained in step c) with at least one polyfunctional compound as polymer precursor comprising at least a first functional group reactive with amines and/or hydroxy groups, preferably an epoxy group, and at least a second functional group reactive with amines and/or hydroxy groups, preferably an epoxy group.

In the first case, step c) and d) are preferably performed simultaneously. While in the second case, step c) and d) are preferably performed sequentially.

Alternatively, step d) may comprise the step of

- reacting the support material obtained in step c) with at least one polyfunctional compound as polymer precursor material comprising at least a first functional group reactive with amines and/or hydroxy groups, preferably an epoxy group, and at least a second functional group reactive with amines and/or hydroxy groups, preferably an epoxy group, followed by
- a reacting with an oligoamine or polyamine.

The amount of the at least one polymer or polymer precursor, in particular the oligoamine, the polyamine or the at least one polyfunctional compound, in step d) can be in the range of 0.1 g to 10.0 g, preferably 0.5 g to 8.0 g, most preferably 1.5 g to 7.0 g, per 1 g of polymer support obtained in step c), based on the dry weight of the polymer support.

Further, step e) is preferably followed by a crosslinking step f): Treating the reaction product resulting from step e) with the at least one polyfunctional compound.

Advantageously, the polyfunctional compound(s) is/are selected from

- epoxides, in particular 1,4-butanedioldiglycidyl ether, trimethylolpropane triglycidyl ether, poly(ethylene glycol) diglycidyl ether, resorcinol diglycidyl ether, glycerol diglycidyl ether, glycidol;
- organic halogen-containing compound, in particular epichlorohydrin, epibromohydrin, 1,1'-Oxybis[2-(2-chloroethoxy)ethane], 1,2-Bis(2-chloroethoxy)ethane, bis(2-chloroethyl) ether, 1-Chloro-3-iodopropane, 1,4-dibromobutane, 1,3-dibromopropane;
- aldehydes, in particular glutaraldehyde.

In step e), the polymer support of step d) is preferably reacted with a quaternary amine, preferably selected from the group consisting of: glycidyltrimethylammonium chloride, glycidylmethyldiethanolammonium chloride, and glycidyltriethylammonium chloride; or a tertiary amine, preferably selected from the group consisting of: N-Methyl-2-pyrrolidone, N-methylmorpholine, N-methylpyrrolidine, N,N-dimethyl ethnaolamine, N-methyl diethanolamine, N-methylpiperidine, N-ethylpiperidine, trimethylamine, triethylamine.

The oligoamine or polyamine can be selected from the group consisting of polyallylamine, linear or branched polyethyleneimine (PEI), poly(2-methylaziridine); preferably a branched PEI.

In a subsequent step of step e) or f) a hydrolysis step, in particular a basic hydrolysis step, can be performed in order eliminate possibly formed esters and hydrolyze ester bonds back to carboxylic acid groups.

Another aspect of the invention refers to an ion exchange material for use as a stationary phase in an analytical or preparative separation process, in particular chromatography process, obtainable by a method as previously described.

A further aspect of the invention refers to a chromatography column, in particular ion exchange chromatography column, filled with an ion exchange material as previously described.

It was surprisingly found that such a column allows the determination of halo acetic acid due to an improved separation of these compounds in short times.

Yet, another aspect of the invention relates to a method of chromatographic separating of analytes, in particular anions, more preferably halo acetic acids, most preferably monochloroacetic acid (MCA), monobromoacetic acid (MBA), Dichloroacetic (DCA) acid and dibromoacetic acid (DBA). The method comprises the step of contacting a solution containing the analyte with the ion exchange material as previously described, in particular the solution is passed through a chromatography column as previously described.

It may also be possible to separate the following compounds: trichloroacetic acid, tribromoacetic acid, bromo-dichloro-acetic acid, chloro-dibromo-acetic acid and dichloropropionic acid.

Most preferably, the method of chromatographic separation can be performed according to EPA 557.

Yet another aspect of the invention refers to the use of an ion exchange material as previously described and/or obtainable by a method as previously described for the analytical or preparative separation of analytes, preferably anions, more preferably halo acetic acids, most preferably for the separation of monochloroacetic acid (MCA), monobromoacetic acid (MBA), Dichloroacetic acid (DCA) and dibromoacetic acid (DBA).

The invention will be described in more details with regard to figures and examples. The figures and examples are not to be understood as limiting. It shows:

Figure 1: Schematic representation of step a) to c) of the method for producing an ion exchanger according to the invention.

Figure 2: Chromatogram obtained with the ion exchange material according to example 4.1 with 0.30 mmol/g COOH.

Figure 3: Chromatogram obtained with the ion exchange material according to example 4.2 with 0.36 mmol/g COOH.

Figure 4: Chromatogram obtained with the ion exchange material according to example 4.3 with 0.41 mmol/g COOH.

Figure 5: Chromatogram obtained with the ion exchange material according to example 6.0 with 0.82 mmol/g COOH.

Figure 6: Relationship between amount of $LiAlH_4$ and carboxylic acid groups detected on the support material for example 2.6 to example 2.9.

Figure 7: Change in selectivity factor and theoretical plates of dichloroacetic acid depending on the amount of carboxylic acid groups according to examples 2.6 to 2.9.

Figure 8: Chromatogram of comparative example A.

Figure 9: Chromatogram of comparative example B.

EXAMPLES

Starting material and determination of pore sizes

The starting material of the following examples are PS/DVB particles. The average pore radius of the PS/DVB particle provided in step a) was determined by nitrogen sorption in the BJH (Barret, Joyner, Halenda) model. The specific surface area was determined by nitrogen sorption in the BET model (Brunauer, Emmett, Teller). For both analyses a sample of 0.10945 g PS/DVB polymer support was used. The density of the sample material was 1.105 g/cc. The measurement was performed on an Autosorb iQ S/N:14713051301 instrument in a 9 mm cell. The bath temperature was 77.35 K. The final degassing temperature was 60°C. The evaluation of the measurement was performed on Quantachrome ASiQwin version 3.01. The measurement was performed twice, once with a soaking time of 80 min, once with a soaking time of 40 min. The outgassing rate was 1.0 °C/min and 20.0 C°/min respectively. The mean pore radius resulting from the BJH method based on the pore volume was 5.1060 nm. The specific surface area according to the Multi-Point BET plot was calculated to be 540.0 $m^2$/g.

Oxidation (Examples 1.1 to 1.4)

The following examples show different examples of the oxidation step b). However, the reaction condition can be varied within the scope of the present invention and possible reaction conditions are herein summarized. The solvent can be either acetic acid or formic acid, while acetic acid is preferred. The reaction temperature may vary between 15 and 80 °C, with 80 °C being the preferred temperature. The temperature ramp can be 30-120 °C/h, preferably 45°C/h. As described above, the reaction is preferably performed in the presence of hydrogen peroxide. The ratio (mol/mol) of acid and hydrogen peroxide can be in range of 1.0:0.12 to 1.0:0.72, preferably 1.0:0.14 to 1.0:0.52, most preferably 1.0:0.16 to 1.0:0.44. The reaction time can vary between 18 to 80 hours, with 72 hours (h) being most preferred.

Examples 1.1

10.1 g PS/DVB (55% DVB in EVB) particles were suspended in 67 g acetic acid and 19 g of hydrogen peroxide (35%) was added. The mixture was heated to 80 °C with a temperature ramp of 45 °C/h. The reaction mixture was stirred for 72 h, cooled down and filtered. The filter cake was washed with water to pH neutral. The filter cake was dried in vacuo at 60 °C for at least 16 h.

Examples 1.2

10.5 g PS/DVB (55% DVB in EVB) particles were suspended in 65 g acetic acid and 27 g of hydrogen peroxide (35%) was added. The mixture was heated to 80 °C with a temperature ramp of 45 °C/h. The reaction mixture was stirred for 72 h, cooled down and filtered. The filter cake was washed with water to pH neutral. The filter cake was dried in vacuo at 60 °C for at least 16 h.

Example 1.3

10.5 g PS/DVB (55% DVB in EVB) particles were suspended in 65 g acetic acid and 24 g of hydrogen peroxide (35%) was added. The mixture was heated to 80 °C with a temperature ramp of 45 °C/h. The reaction mixture was stirred for 72 h, cooled down and filtered. The filter cake was washed with water to pH neutral. The filter cake was dried in vacuo at 60 °C for at least 16 h.

Example 1.4

10.1 g PS/DVB (55% DVB in EVB) particles were suspended in 64 g acetic acid and 28 g of hydrogen peroxide (35%) was added. The mixture was heated to 80 °C with a temperature ramp of 45 °C/h. The reaction mixture was stirred for 72 h, cooled down and filtered. The filter cake was washed with water to pH neutral. The filter cake was dried in vacuo at 60 °C for at least 16 h.

Reduction (Examples 2.1 - 2.11)

The following examples show different examples of the partial reduction of step c). However, the reaction condition can be varied within the scope of the present invention and possible reaction conditions are herein summarized. The reaction temperature can be between 20 to 110 °C. The amount of reducing agent can be between 0.03 g to 1.0 g, preferably 0.05 g to 0.8 g, most preferably 0.1 g to 0.5 g per 1 g of dry polymer support. The reaction time may vary between 3 to 30 h. In case of Lithium aluminum hydride ($LiAlH_4$) as reducing agent (examples 2.1-2.9), the solvent is preferably cylcopentylmethylether, tetrahydrofuran, toluene, wherein all solvents are dry grade (<0.1 % water). In case of sodium borohydride ($NABH_4$) or sodium triacetoxyborohydride as reducing agent (examples 2.10 -2.11), the solvent can be water, ethanal, methanol, tetrahydrofuran.

Example 2.1

10 g of the dried product of Example 1.1 was suspended in 40 mL cyclopentylmethylether. The mixture was heated to 70 °C, after which 2.7 g lithium aluminum hydride was added. The mixture was heated to 110 °C and stirred for 18 h. The temperature was reduced to 50 °C and quenched with acetone, followed by water. The mixture was filtered, the particles were resuspended and washed with the following solutions: acetone, tartaric acid/acetic acid solution (2.5/1 wt%, aq. 47%), water and ethanol. The particles were dried in vacuo at 60 °C for at least 16 h. The reaction produces a polymer support with 0.30 mmol/g COOH.

Example 2.2

The procedure was the same as in Example 2.1, but the product of Example 1.2 was used as a substrate. The reaction produces a polymer support with 0.36 mmol/g COOH.

Example 2.3

10 g of the dried product Example 1.2 was suspended in 40 mL cyclopentylmethylether. The mixture was heated to 70 °C, after which 2.3 g lithium aluminum hydride was added. The mixture was heated to 110 °C and stirred for 18 h. The temperature was reduced to 50 °C and quenched with acetone, followed by water. The mixture was filtered, the particles were resuspended and washed with the following solutions: acetone, tartaric acid/acetic acid solution (2.5/1 wt%, aq. 47%), water and ethanol. The particles were dried in vacuo at 60 °C for at least 16 h. The reaction produces a polymer support with 0.41 mmol/g COOH.

Example 2.4

10 g of the dried product of Example 1.2 was suspended in 40 mL cyclopentylmethylether. The mixture was heated to 70 °C, after which 3.3 g lithium aluminum hydride was added. The mixture was heated to 95 °C and stirred for 24 h. The temperature was reduced to 50 °C and quenched with acetone, followed by water. The mixture was filtered, the particles were resuspended and washed with the following solutions: acetone, tartaric acid/acetic acid solution (2.5/1 wt%, aq. 47%), water and ethanol. The particles were dried in vacuo at 60 °C for at least 16 h. the reaction produces a polymer support with 0.17 mmol/g COOH.

Examples 2.5

The procedure was the same as in Example 2.4, but the product of Example 1.3 was used as a substrate. The reaction produces a polymer support with 0.15 mmol/g COOH.

Example 2.6

10 g of the reaction product of Example 1.4 was suspended in 40 mL cyclopentylmethylether. The mixture was heated to 50 °C, after which 1.8 g lithium aluminum hydride was added. The mixture was heated to 95 °C and stirred for 24 h. The temperature was reduced to 50 °C and quenched with acetone, followed by water. The mixture was filtered, the particles were resuspended and washed with the following solutions: acetone, tartaric acid/acetic acid solution (2.5/1 wt%, aq. 47%), water and ethanol. The particles were dried in vacuo at 60 °C for at least 16 h. the reaction produces a polymer support with 0.32 mmol/g COOH.

Examples 2.7

10 g of the reaction product of Example 1.4 was suspended in 40 mL cyclopentylmethylether. The mixture was heated to 50 °C, after which 2.3 g lithium aluminum hydride was added. The mixture was heated to 95 °C and stirred for 24 h. The temperature was reduced to 50 °C and quenched with acetone, followed by water. The mixture was filtered, the particles were resuspended and washed with the following solutions: acetone, tartaric acid/acetic acid solution (2.5/1 wt%, aq 47%), water and ethanol. The particles were dried in vacuo at 60 °C for at least 16h. the reaction produces polymer support with 0.27 mmol/g COOH.

Example 2.8

10 g of the reaction product of Example 1.4 was suspended in 40 mL cyclopentylmethylether. The mixture was heated to 50 °C, after which 3.8 g lithium aluminum hydride was added. The mixture was heated to 95 °C and stirred for 24 h. The temperature was reduced to 50 °C and quenched with acetone, followed by water. The mixture was filtered, the particles were resuspended and washed with the following solutions: acetone, tartaric acid/acetic acid solution (2.5/1 wt%, aq 47%), water and ethanol. The particles were dried in vacuo at 60 °C for at least 16h. the reaction produces polymer support with 0.19 mmol/g COOH.

Example 2.9

10 g of the reaction product of Example 1.4 was suspended in 40 mL cyclopentylmethylether. The mixture was heated to 50 °C, after which 4.3 g lithium aluminum hydride was added. The mixture was heated to 95 °C and stirred for 24 h. The temperature was reduced to 50 °C and quenched with acetone, followed by water. The mixture was filtered, the particles were resuspended and washed with the following solutions: acetone, tartaric acid/acetic acid solution (2.5/1 wt%, aq. 47%), water and ethanol. The particles were dried in vacuo at 60 °C for at least 16 h.

Example 2.10

5 g of the reaction product of Example 1.4 was suspended in 25 mL water and 3 mL sodium hydroxide (aq, 30%). 5 g sodium borohydride was added to the suspension. The mixture was heated to 80 °C and stirred for 17 h. The reaction mixture was cooled to room temperature and 100 mL sulfuric acid (aq, 10%) was added. The mixture was filtered and washed with water until pH neutral, followed by acetone. The particles were dried in vacuo at 60 °C for at least 16h. the reaction results in a polymer support of 1.02 mmol/g COOH.

Example 2.11

5 g of the reaction product of Example 1.1 were suspended in 40 mL ethanol. 1.35 g polyethyleneimine ($M_n$ =10'000 Da) was added, followed by 0.25 mL acetic acid. The mixture was stirred for 1 h, followed by the addition of 1.9 g sodium triacetoxyborohydride. The reaction mixture was stirred for 19 h. The mixture was filtered and the filter cake was washed with water until pH neutral. The particles were dried in vacuo at 60 °C for at least 16h. the reaction results in a polymer support with 0.82 mmol/g COOH.

Introducing sulfonic acid groups (example 3)

The following examples show the introduction of sulfonic acid groups either after step b or c). The reaction can be performed in either acetic acid, dichloroethane or dichloromethane. Acetic acid is preferred.

Example 3.0

17 g of the particles of Example 1.3 were reduced as described in Example 2.1, these particles have a carboxylic acid content of 0.23 mmol/g. The particles were suspended in 100 mL acetic acid and 20 mL sulfuric acid and reacted for 32 seconds. Then, the reaction mixture was diluted wit 50 mL hydrochloric acid and filtered. The filter cake was washed with water, ethanol, sodium hydroxide (aq, 2M), water, hydrochloric acid (aq, 1M) and water until pH neutral. The particles were dried in vacuo at 60°C for 16 h, resulting in a product containing 0.38 mmol/g of both carboxylic ad sulfuric acid groups as negative charges.

Introduction of the polymer layer with anion exchange group (Examples 4.1-4.4, 5.1-5.6 and 6.1)

The following examples describe specific embodiments for introducing a polymer layer on the polymer support.
The following reaction comprises examples of forming the polymer layer from BDGE and an amine, BDGE and PEI or PEI. The reaction conditions may be adjusted as follows and are not limited to the conditions provided in the examples: The amount of polymer or polymer precursor can be 0.1 g to 10 g, preferably 0.5 g to 8.0 g, most preferably 1.5 g to 7.0 g per 1 g of dry polymer support.
The reaction is preferably performed in ethanol, water, dimethylsulfoxide or a combination thereof. The reaction temperature is chosen between 20 to 80 °C, whereas 40 °C is preferred for BDGE and 60°C is preferred for PEI. The reaction time is chosen between 2 and 24 hours. Specific for the introduction of BDGE is the addition of a base, preferably sodium hydroxide and a repetition of 0 to 20 reaction cycles.
The reaction conditions for introducing the anion exchange group can be summarized as follows: In the examples listed below either a quaternary ammonium is added to PEI; or a tertiary amine is added to BDGE. As quaternary amine-introducing species can be used: glycidyltrimethylammonium chloride; glycidylmethyldiethanolammonium chloride; and glycidyltriethylammonium chloride. As tertiary amine can be used: N-Methyl-2-pyrrolidone, N-methylmorpholine, N-methylpyrrolidine, N,N-dimethyl ethnaolamine, N-methyl diethanolamine, N-methylpiperidine, N-ethylpiperidine, trimethylamine, triethylamine. The reaction is performed in water or dimethylsulfoxide with a reaction temperature between 20 to 80 °C and a reaction time of 2 to 24 h.

An additional crosslinking step f) can be performed in water or dimethylsulfoxide at temperatures between 30 to 80 °C, preferably 60 °C and a reaction time of 1 to 24 h, preferably 3 h.

The elimination step in the following examples can be performed under basic conditions, preferably an aqueous solutions of sodium hydroxide (0.5 to 7.5 M), sodium carbonate (0.5 to 5.0 M) and potassium hydroxide (0.5 to 7.5 M) at temperature between 20 to 100 °C and reaction times of 2 h to 2 month (1460 h).

BDGE - PEI - AMMONIUM ION - CROSSLINKING

Example 4.1

10 g of the reaction product of Example 2.1 was suspended in 31 mL dimethyl sulfoxide and 25 mL 1,4-butanediol diglycidyl ether. The mixture was heated to 40 °C. 23 mL water and 2.3 mL NaOH (aq, 33%) were added to the reaction mixture and stirred for 5 h. The mixture was filtered and the filter cake was washed with water until pH neutral. The dry particles were suspended in 30 mL of a 1:4 v/v ethanol/water mixture. 4 g of polyethyleneimine ($M_n$ = 600 Da) were added and the mixture was stirred at 60 °C for 16 h. The mixture was filtered and the filter cake was washed with water until pH neutral. The filter cake was dried in vacuo, yielding particles with a thick polymer layer. The particles were suspended in 100 mL water. 14 g of glycidyl trimethylammonium chloride were added and the mixture was stirred at 60 °C for 4 h. The mixture was filtered and the filter cake was washed with water until pH neutral. The dry particles were suspended in 200 mL water and 18.4 mL of 1,4-butanediol diglycidyl ether was added. The mixture was heated to 60 °C and stirred for 2.5 h. The reaction mixture was filtered and the filter cake was washed with water until pH neutral. The cake was suspended in 600 mL sodium hydroxide (aq, 1M) and stirred for 16 h. The reaction mixture was filtered and the filter cake was washed with water until pH neutral. The particles were packed into a 4x250 mm PEEK column.

Example 4.2

The procedure was the same as in Example 4.1, but the product of Example 2.2 was used as a substrate.

Example 4.3

The procedure was the same as in Example 4.1, but the product of Example 2.3 was used as a substrate.

Example 4.4

The procedure was the same as in Example 4.1, but the product of Example 3 was used as a substrate.

BDGE - AMINE

Example 5.1

20 g of the reaction product of Example 2.4 was suspended in 75 mL dimethyl sulfoxide and 50 mL 1,4-butanediol diglycidyl ether. The mixture was heated to 40 °C and 50 mL NaOH (aq, 1M) was added. The reaction mixture was stirred for 5 h. The mixture was filtered and the filter cake was washed with water until pH neutral. The whole procedure was repeated once more, after which 26.6 g of particles with a thick, hydrophilic polymer layer were obtained. 15 g of these particles were suspended in a 1:1 v/v dimethyl sulfoxide/water mixture. 90 mL of N-methylpyrrolidine was added and the mixture was stirred at 70°C for 3 h. The reaction mixture was filtered and the filter cake was washed with water until pH neutral. The dry particles were suspended in 100 mL water and the mixture was heated to 100°C. 40 mL sodium hydroxide solution (aq, 30%) was added and the reaction mixture was stirred for 35 h. The mixture was filtered and washed with water until pH neutral. The particles were packed into a 4x150 mm column.

Example 5.2

The procedure was the same as in Example 5.1, but the product of Example 2.5 was used as a substrate.

Example 5.3

The procedure was the same as in Example 5.1, but the product of example 2.6 was used as a substrate.

Example 5.4

The procedure was the same as in Example 5.1, but the product of Example 2.7 was used as a substrate.

Example 5.5

The procedure was the same as in Example 5.1, but the product of Example 2.8 was used as a substrate.

Example 5.6

The procedure was the same as in Example 5.1, but the product of Example 2.9 was used as a substrate.

PEI - AMMONIUM ION - CROSSLINKING

Example 6.0

5 g of the reaction product of Example 2.11 was suspended in 20 mL dimethylsulfoxide and 10 g of glycidyl trimethylammonium chloride was added. The reaction mixture was stirred for 16 hours. The mixture was filtered and the filter cake was washed with water until pH neutral. The dry particles were suspended in 50 mL water and 10 mL 1,4-butandioldiglycidylether was added. The reaction mixture was stirred at 60 °C for 3 hours. The mixture was filtered and the filter cake was washed with water. The particles were suspended in 50 mL sodium hydroxide (aq, 1 M) and stirred for 15 hours at 60 °C. The particles were packed into a 4x150 mm PEEK column.

Titration method to determine negative charges (COO⁻/SO₃⁻) on the polymer support

Example 7

The fully protonated, dry particles of Example 2.1 - 2.9 and 3 (between 0.9 - 1.0 g) are suspended in each 20 mL sodium hydroxide (aq, 0.05 M). The particles were shaken in the solution for 30 minutes. The suspension was centrifuged at 3800 RPM and 12 mL of the supernatant was taken using a syringe. The solution was filtered through a syringe filter (0.45 $\mu$m). Exactly 10 mL of the filtered solution was transferred to a beaker and diluted with 50 mL ultrapure water. The solution was titrated using a hydrochloric acid solution (aq, 0.05 M). The carboxylic and/or sulfuric acid content was calculated using the following equation:

$$\text{negative charges (mmol/g)} = \frac{2((V_{NaOH} \times c_{NaOH}) - (c_{HCl} \times V_{EP}))}{m}$$

$V_{NaOH}$ = Volume of transferred solution (mL)
$C_{NaOH}$ = concentration NaOH (mol/L)
$c_{HCl}$ = concentration HCl (mol/L)
$V_{EP}$= Amount of volume used up to equivalent point (mL)
m = weight of particles (g)

Ion Chromatography

Example 8

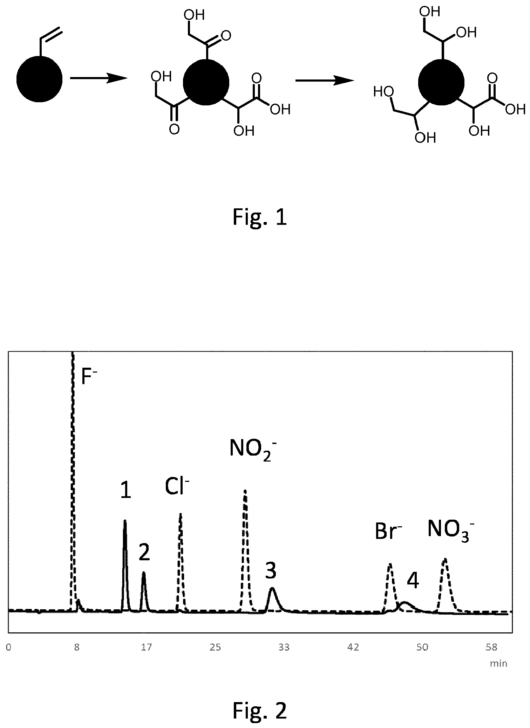

Examples 4.1 - 4.4 were packed in a 4x250 mm column and Example 6 was packed in a 4x150 mm column and a solution of fluoride, chloride, nitrite, bromide, nitrate, monochloroacetic acid (MCA), monobromoacetic acid (MBA), dichloroacetic acid (DCA) and dibromoacetic acid (DBA) were passed though the column at 15 °C using 9 mM KOH as a mobile phase with a flow rate of 0.8 mL/min. Fig. 2 - 5 show a chromatogram obtained using such column.

Examples 5.1 - 5.6 were packed in a 4x150 mm column and a solution of fluoride, chloride, nitrite, bromide, nitrate and dichloroacetic acid (DCA) were passed though the column at 30 °C using 6:1 mM $Na_2CO_3$/$NAHCO_3$ as a

mobile phase with a flow rate of 0.8 mL/min.

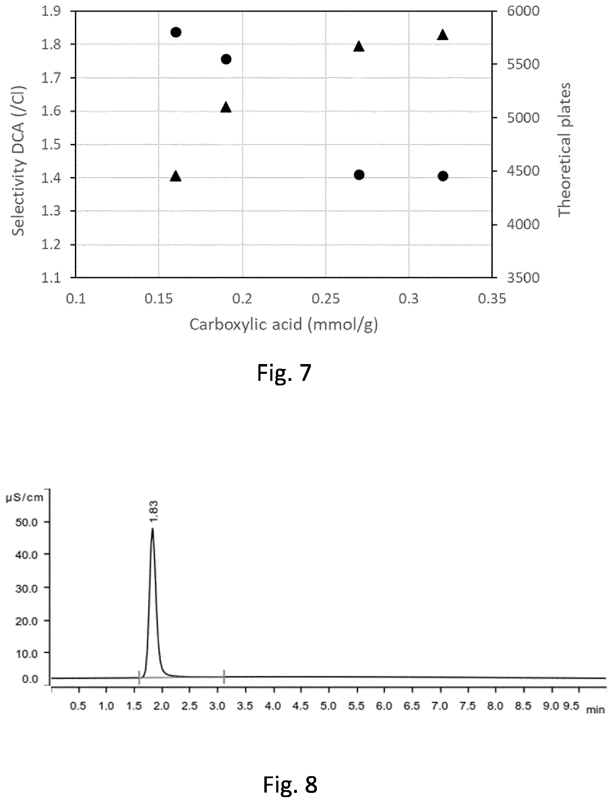

The selectivity ($\alpha$) of DCA and DBA towards chloride as listed in Table 1 and 2 and Fig 7 was calculated from the chromatograms with the following formula:

$$\alpha_{DCA} = \frac{t_{DCA} - t_0}{t_{Cl} - t_0} \qquad \alpha_{DBA} = \frac{t_{DBA} - t_0}{t_{Cl} - t_0}$$

$t_{DCA}$ = retention time of dichloroacetic acid (DCA)
$t_{Cl}$ = retention time of cloride (Cl)
$t_{DBA}$ = retention time of dibromoacetic acid
$t_0$ = dead time

The theoretical plates of DCA were calculated using the following formula:

$$TP = 16(\frac{t_{DCA}}{W_{b,DCA}})^2$$

$t_{DCA}$ = retention time of dichloroacetic acid (DCA)
$W_{b,DCA}$ = Peak width of dichloroactic acid (DCA)
TP = theoretical plates

Determination of Hydrophilicity

Hydrophilicity was determined as follows: 1 g of hydrophilized PS/DVB particles obtained after step c) or hydrophilized particles of examples 2.1 to 2.9, respectively, were suspended in 20 mL water using a Phoenix RA-VA-10 Vortex mixer, shaking the solution for 30 seconds. The particles remained suspended for 15 minutes, after which they started settling on the bottom of the

Reference particles PS/DVB (untreated; as provided in step a)) were subjected to the same test but did not suspend in water and remained on top of the water layer.

Particles obtained after step b) or examples 1.1 to 1.4, respectively, also form suspension under the conditions described above.

COMPARATIVE EXAMPLES

Example A

(no reduction)

10 g of the reaction product of Example 1.1 was suspended in 37.5 mL dimethyl sulfoxide and 25 mL 1,4-butanediol diglycidyl ether. The mixture was heated to 40 °C and 25 mL NaOH (aq, 1M) was added. The reaction mixture was stirred for 6 h. The mixture was filtered, and the filter cake was washed with water till pH neutral. The whole procedure was repeated once more, after which the remaining epoxides were reacted with 60 mL N-methyl-2-pyrrolidone in a 1:1 v/v mixture of water/dimethyl sulfoxide (120 mL).

Example B

(partial reduction by triacetoxyborohydride and functionalization with low $M_n$ polyethyleneimine (600 Da))

5 g of the particles of Example 1.1 was suspended in 40 mL ethanol. 5 g polyethyleneimine ($M_n$ = 600 Da) was added, followed by 0.25 mL acetic acid. The mixture was stirred for 1 h, followed by the addition of 6.3 g sodium triacetoxyborohydride. The reaction mixture was stirred for 15 h. The mixture was filtered and the filter cake was washed with water until pH neutral. The particles were functionalized with an anion exchange group as described in 6.0.

Figure 1 shows a schematic representation of step a) to c) of the method for producing an ion exchanger according to the invention. In a first step, PS/DVB particle are provided as a polymer support. The particles are subjected to an oxidative treatment in order to introduce carboxylic acid groups, among other carbonyl groups, to the polymer support. A partial reduction step leads to a mixture of hydroxy groups and carboxylic acid groups on the polymer support.

The hydroxy groups may in further steps react with polymer or polymer precursors to form a polymer layer (step not shown).

Figure 2 shows the chromatogram obtained with an ion exchange material according to example 4.1 with 0.3 mmol/g COOH. The chromatogram shows the separation of haloacetic acids, namely monochloroacetic acid 1, monobromoacetic acid 2, dichloroacetic acid 3 and dibromoacetic acid 4 (full lines), against the five standard anions fluoride, chloride, nitrite, bromide, nitrate. The haloacetic acid show a good separation with reasonable retention times.

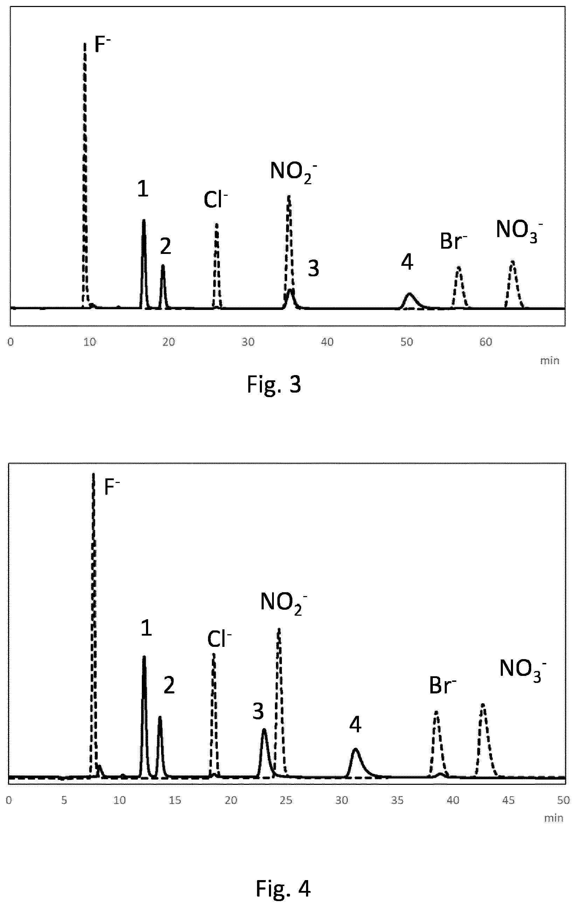

Figure 3 shows the chromatogram obtained with the ion exchange material according to example 4.2 with 0.36 mmol/g COOH. The selectivity of the halo acetic acids compared to the standard anions has changed compared to the example of figure 2.

Figure 4 shows the chromatogram obtained with the ion exchange material according to example 4.3 with 0.41 mmol/g. the halo acetic acid still show a very good separation. The retention time of the halo acetic acids is shorter compared to the examples shown in figure 2 and 3.

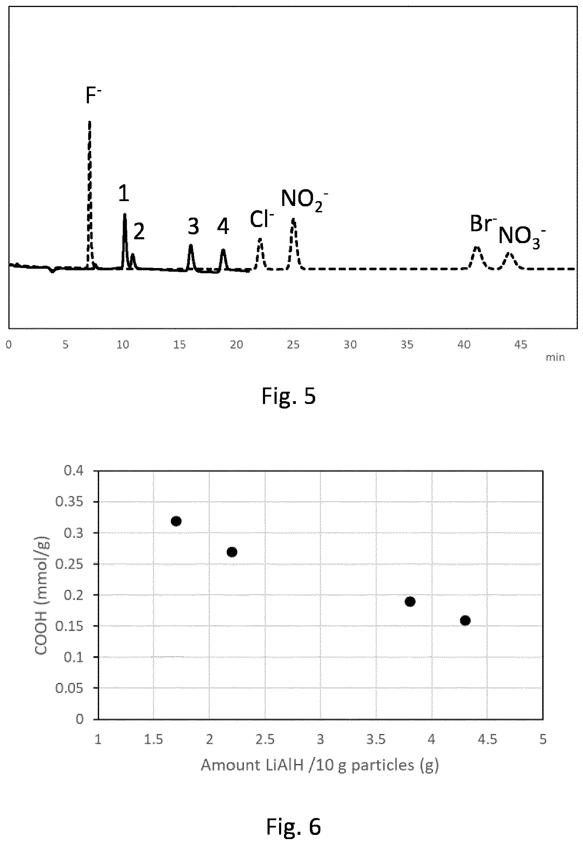

Figure 5 shows the chromatogram obtained with the ion exchange material according to example 6.0 with 0.82 mmol/g COOH. The separation of the halo acetic acid is still sufficiently good, the retention time of the halo acetic acids is even shorter than the retention time in figure 4.

Thus, the examples of figures 2 to 5 show the influence of the amount of carboxylic acid groups on the separation properties and retention properties of the ion exchange material according to the invention.

Figure 6 shows the relationship between the amount of lithium aluminum hydride and carboxylic acid groups detected on the support material for examples 2.6 to 2.9. Thus, it can be seen that the amount of carboxylic acid can be controlled by the amount of reducing agent added.

Figure 7 shows the changes in selectivity factor (circles) and theoretical plates (triangles) of dicloroacetic acid (DCA) depending on the amount of carboxylic acid groups according to examples 2.6 to 2.9.

Table 1 shows the influence on the selectivity and theoretical plates of DCA by variation in carboxylic acid content by varying the oxidation conditions while the reduction conditions remain the same (Example 2.4 and 2.5). Measurement conditions: 6:1 mM $Na_2CO_3/NaHCO_3$, 30 °C, 0.8 mL/min

Table 1

| mmol/g COOH reduced particle | $\alpha$ DCA | Theoretical plates DCA |
|---|---|---|
| 0.17 | 1.86 | 4381 |
| 0.15 | 2.15 | 3084 |

Table 2 shows the influence of $SO_3^-/COO^-$ groups (Example 4.4) compared to only $COO^-$ groups (Example 4.3) on the selectivity of DCA and DBA. Measurement conditions: 9 mM KOH, 30 °C, 0.8 mL/min.

Table 2

| Negative charges (mmol/g) | Type | $\alpha$ DCA | $\alpha$ DBA |
|---|---|---|---|
| 0.38 | Carboxylic and sulfonic acid | 1.28 | 1.73 |
| 0.41 | Carboxylic acid | 1.40 | 1.90 |

Table 2 shows that a similar amount of negative charges resulting from $SO_3/COOH$ compared to only COOH lowers the selectivity for DCA and DBA and accelerates the elution of these halo acetic acids to earlier retention times due to the higher $pk_a$ of $SO_3H$ compared to COOH.

Figure 8 shows the chromatogram of comparative example A. Without a reduction step and the tuning of the amount of carboxylic acid groups, the support material is not suitable for the separation of the halo acetic acids. The polymer layer is not sufficiently bound. There are too many carboxylic acid groups and too few or even no hydroxy groups to which the polymer layer can be bound, i.e. the polymer or polymer precursor attached to the carboxylic acid groups is eliminated from the surface again due to the hydrolysis step. The capacity of the column, which is created by the polymer layer, is lost.

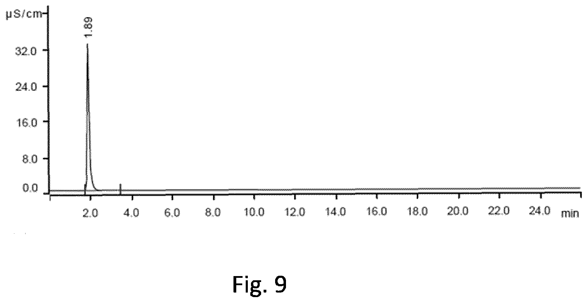

Figure 9 show the chromatogram of the comparative example B. In this example, a polymer layer is formed where anionic and cationic group are in proximity, leading to a net charge of zero in an area where the ion exchange should take place. The different charges are not sufficiently spatially separated. Thus, there is almost no interaction between the ion exchange material and the analyte solution, leading to an almost immediately elution of the anions.

**Claims**

1. Ion exchange material for use as a stationary phase in an analytical or preparative separation process, in particular for the separation of anions, preferably halo acetic acids, the material comprising

   - a polymer support,
   - acid groups directly attached to a surface of the polymer support, wherein the acid groups are selected from the group consisting of: sulfonic acid groups; carboxylic acid groups or combination thereof,
   - a polymer layer, covalently attached to the surface of the polymer support, wherein the polymer layer comprises an anion exchange group,

   wherein the amount of acid groups is in the range of 0.05 - 1.05 mmol/g of polymer support, preferably 0.1 - 0.9 mmol/g and particularly preferably 0.16 - 0.85 mmol/g, **characterized in that** the acid groups and the anion exchange group are spatially separated, preferably through the polymer layer, by at least 10 nm, preferably by at least 50 nm and most preferably by at least 100 nm.

2. Ion exchange material according to claim 1, wherein the polymer support is

   - at least partially derived from aromatic hydrocarbon compounds having at least two vinyl or allyl substituents, preferably at least partially derived from divinylbenzene monomers; and
   - partially derived from monomers selected from the group of ethylvinylbenzene, vinyl acetate, styrene and any combination thereof;

   wherein the relative amount of aromatic hydrocarbon compounds having at least two vinyl or allyl substituents, preferably the relative amount of divinylbenzene derived monomers, is preferably at least 50 % by weight.

3. Ion exchange material according to one of claims 1 or 2, wherein the polymer layer is derived from

   - a reaction of the polymer support with an oligoamine or polyamine, or
   - a reaction of the polymer support with at least one polyfunctional compound comprising at least a first functional group reactive with amines and/or hydroxy groups, preferably an epoxy group, and at least a second functional group reactive with amines and/or hydroxy groups.

4. Ion exchange material according to claim 1 or 2, wherein the polymer layer is derived from

   - a reaction of the polymer support with at least one polyfunctional compound comprising at least a first functional group reactive with amines and/or hydroxy groups, preferably an epoxy group, and at least a second functional group reactive with amines and/or hydroxy groups, followed by
   - a reaction with an oligoamine or polyamine.

5. Ion exchange material according to claim 3 or 4, wherein the polymer layer is crosslinked with the at least one polyfunctional compound, wherein the at least one polyfunctional compound is selected from:

   - epoxides, in particular 1,4-butanedioldiglycidyl ether, trimethylolpropane triglycidyl ether, poly(ethylene glycol) diglycidyl ether, resorcinol diglycidyl ether, glycerol diglycidyl ether, glycidol;
   - organic halogen-containing compounds, in particular epichlorohydrin, epibromohydrin, 1,1'-Oxybis[2-(2-chloroethoxy)ethane], 1,2-Bis(2-chloroethoxy)ethane, bis(2-chloroethyl) ether, 1-Chloro-3-iodopropane, 1,4-dibromobutane, 1,3-dibromopropane;
   - aldehydes, in particular glutaraldehyde.

6. Ion exchange material according to one of claims 3 to 5, wherein the oligoamine or polyamine is selected from the group consisting of polyallylamine, linear or branched polyethyleneimine (PEI), poly(2-methylaziridine); preferably a branched PEI.

7. Method of producing an ion exchange material with an amount of acid groups in the range of 0.05 - 1.05 mmol/g of a polymer support, preferably 0.1 - 0.9 mmol/g and particularly preferably 0.16 - 0.85 mmol/g, and with each acid group being spatially separated from an anion exchange group by at least 10 nm, preferably by at least 50 nm and most preferably by at least 100 nm, for use as a stationary phase in an analytical or preparative separation process, preferably an ion exchange material according to one of claims 1 to 6, the method comprising the steps of

a) Providing a polymer support,
b) Oxidative treatment of the polymer support in the presence of an oxidative agent, preferably a peracid;
c) Partial reduction of the polymer support obtained in step b) with a reducing agent to obtain a hydrophilized polymer support;
d) Reacting the product of step c) with at least one polymer or polymer precursors to obtain a polymer layer on the polymer support;
e) introducing an anion exchange group to the polymer layer; wherein steps c) and d) are performed simultaneously or sequentially, in total or in part.

8. Method according to one of claims 9 or 10, wherein the amount of peracid in step b) is generated in the presence of acid and hydrogen peroxide, wherein the ratio (mol/mol) between acid and $H_2O_2$ is in the range of 1.0:0.12 to 1.0:0.72, preferably 1.0:0.14 to 1.0:0.52, most preferably 1.0:0.16 to 1.0:0.44.

9. Method according to one of claims 7 to 8, wherein the amount of reducing agent in step c) is in the range of 0.03 g to 1.0 g, preferably 0.05 g to 0.8 g, most preferably 0.1 g to 0.5 g per 1.0 g of polymer support obtained in step b), based on the dry weight of the polymer support.

10. Method according to one of claims 7 to 9, wherein the amount of the at least one polymer or polymer precursor in step d) is in the range of 0.1 g to 10.0 g, preferably 0.5 g to 8.0 g, most preferably 1.5 g to 7.0 g, per 1 g of polymer support obtained in step c), based on the dry weight of the polymer support.

11. Method according to one of claims 7 to 10, wherein step e) is followed by a crosslinking step f): Treating the reaction product resulting from step e) with the at least one polyfunctional compound.

12. Method according to claim 7 to 11, wherein, in step e), the polymer support of step d) is reacted with a quaternary amine, preferably selected from the group consisting of: glycidyltrimethylammonium chloride, glycidylmethyldiethanolammonium chloride, and glycidyltriethylammonium chloride; or a tertiary amine, preferably selected from the group consisting of: N-Methyl-2-pyrrolidone, N-methylmorpholine, N-methylpyrrolidine, N,N-dimethyl ethnaolamine, N-methyl diethanolamine, N-methylpiperidine, N-ethylpiperidine, trimethylamine, triethylamine.

13. Ion exchange material for use as a stationary phase in an analytical or preparative separation process, in particular chromatography process, obtainable by a method according to one of claims 7 to 12.

14. Chromatography column, in particular ion exchange chromatography column, filled with an ion exchange material according to one of claims 1 to 6.

15. Method of chromatographic separating of analytes, preferably anions, more preferably halo acetic acids, most preferably monochloroacetic acid (MCA), monobromoacetic acid (MBA), Dichloroacetic (DCA) acid and dibromoacetic acid (DBA), wherein a solution containing the analyte is contacted with the ion exchange material according to any one of claims 1 to 6, in particular is passed through a chromatography column according to claim 14.

16. Use of an ion exchange material according to one of claims 1 to 6 and/or obtainable by a method according to one of claims 7 to 12 for the analytical or preparative separation of analytes, preferably anions, more preferably halo acetic acids, most preferably for the separation of monochloroacetic acid (MCA), monobromoacetic acid (MBA), Dichloroacetic acid and dibromoacetic acid.

Fig. 1

Fig. 2

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 22 18 8945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 019 126 A1 (METROHM AG [CH]) 29 June 2022 (2022-06-29) * the combination of examples 1, 2.1, 3.1, 4.1, 5.1, 6.1 and 10 * | 1-16 | INV. B01J20/26 B01D15/36 B01J20/28 B01J20/30 |
| A | US 5 503 933 A (AFEYAN NOUBAR B [US] ET AL) 2 April 1996 (1996-04-02) * the whole document * | 1-16 | B01J20/32 B01J41/12 B01J41/20 |
| A | US 2022/204712 A1 (SEUBERT ANDREAS [DE] ET AL) 30 June 2022 (2022-06-30) * the whole document * | 1-16 | |
| A | US 5 389 449 A (AFEYAN NOUBAR B [US] ET AL) 14 February 1995 (1995-02-14) * the whole document * | 1-16 | |

TECHNICAL FIELDS
SEARCHED      (IPC)

B01J
B01D

The present search report has been drawn up for all claims

| Place of search | Date of completion of the search | Examiner |
|---|---|---|
| The Hague | 17 January 2023 | Mc Donnell, Shane |

## ANNEX TO THE EUROPEAN SEARCH REPORT
## ON EUROPEAN PATENT APPLICATION NO.

EP 22 18 8945

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2023

| Patent document cited in search report | | | Publication date | Patent family member(s) | | Publication date |
|---|---|---|---|---|---|---|
| EP 4019126 | A1 | | 29-06-2022 | EP 4019126 A1 | | 29-06-2022 |
| | | | | WO 2022136422 A1 | | 30-06-2022 |
| US 5503933 | A | | 02-04-1996 | AU 1931095 A | | 11-09-1995 |
| | | | | DE 69513156 T2 | | 27-04-2000 |
| | | | | EP 0751823 A1 | | 08-01-1997 |
| | | | | US 5503933 A | | 02-04-1996 |
| | | | | WO 9523022 A1 | | 31-08-1995 |
| US 2022204712 | A1 | | 30-06-2022 | CN 113905821 A | | 07-01-2022 |
| | | | | EP 3721998 A1 | | 14-10-2020 |
| | | | | EP 3953034 A1 | | 16-02-2022 |
| | | | | JP 2022528188 A | | 08-06-2022 |
| | | | | US 2022204712 A1 | | 30-06-2022 |
| | | | | WO 2020208026 A1 | | 15-10-2020 |
| US 5389449 | A | | 14-02-1995 | AU 654323 B2 | | 03-11-1994 |
| | | | | CA 2099574 A1 | | 05-07-1992 |
| | | | | EP 0620761 A1 | | 26-10-1994 |
| | | | | JP H06504482 A | | 26-05-1994 |
| | | | | US 5389449 A | | 14-02-1995 |
| | | | | WO 9211933 A1 | | 23-07-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020208026 A1

- US 20050181224 A

**Non-patent literature cited in the description**

- **C. POHL ; C.SAINI.** *J. Chromatogr. A,* 2008, vol. 1213, 37-44

- **A.S. UZHEL et al.** *J. Chromatogr. A,* 2017, vol. 1482, 57-64